# EUROPEAN PATENT APPLICATION

(11) **EP 3 860 237 A1**
(43) Date of publication of application: **04.08.2021**
(21) Application number: 19867300.6
(22) Date of filing: 12.09.2019
(51) Int. Cl.: H04W 56/00, H04W 74/08

(54) **TIME CALIBRATION METHOD AND DEVICE**

(30) Priority: 25.09.2018 CN 201811117194
(71) Applicant: VIVO MOBILE COMMUNICATION CO., LTD., Dongguan, Guangdong 523860 (CN)
(72) Inventor: WU, Yumin, Dongguan, Guangdong 523860 (CN)
(74) Representative: Conti, Marco
(86) International application number: PCT/CN2019/105605
(87) International publication number: WO 2020/063363

(57) **Abstract**

Embodiments of this disclosure provide a time calibration method and device. The method includes: determining time amount information for calibrating reference time; and calibrating, based on the time amount information, the reference time transmitted by a network side.

## Description

### CROSS-REFERENCE TO RELATED APPLICATIONS

This application claims priority to Chinese Patent Application No. 201811117194.8, filed in China on September 25, 2018, which is incorporated herein by reference in its entirety.

### TECHNICAL FIELD

Embodiments of this disclosure relate to the field of communications technologies, and specifically, to a time calibration method and device.

### BACKGROUND

When a network side provides reference time for a terminal, due to impact of a transmission latency on an air interface, a time point at which the terminal receives the reference time from the network side is inconsistent with a time point at which the network actually transmits the reference time.

In a case in which the terminal requires reference time of high accuracy (for example, 1 microsecond (µs)), the reference time transmitted by the network cannot satisfy a requirement of the terminal on reference time accuracy due to the transmission latency on the air interface.

### SUMMARY

An objective of embodiments of this disclosure is to provide a time calibration method and device, to resolve a problem that reference time transmitted by a network cannot satisfy a requirement of a terminal on reference time accuracy.

According to a first aspect, an embodiment of this disclosure provides a time calibration method applied to a terminal, where the method includes:
determining time amount information for calibrating reference time; and
calibrating, based on the time amount information, the reference time transmitted by a network side.

According to a second aspect, an embodiment of this disclosure further provides a terminal, including:
a determining module, configured to determine time amount information for calibrating reference time; and
a calibration module, configured to calibrate, based on the time amount information, the reference time transmitted by a network side.

According to a third aspect, an embodiment of this disclosure further provides a terminal, including a processor, a memory, and a program stored in the memory and capable of running on the processor, where when the program is executed by the processor, the steps of the time calibration method according to the first aspect are implemented.

According to a fourth aspect, an embodiment of this disclosure further provides a computer-readable storage medium, where the computer-readable storage medium stores a computer program, and when the computer program is executed by a processor, the steps of the time calibration method according to the first aspect are implemented.

In the embodiments of this disclosure, the terminal can calibrate the reference time transmitted by the network side, to improve accuracy of the reference time received by the terminal.

### BRIEF DESCRIPTION OF DRAWINGS

A person of ordinary skill in the art will be clear about other advantages and benefits by reading the following detailed description of optional embodiments. The accompanying drawings are merely intended to illustrate the objectives of the optional embodiments and are not intended to limit this disclosure. Throughout the accompanying drawings, the same reference numerals represent the same components. In the drawings:
FIG. 1 is a schematic architectural diagram of a wireless communications system according to an embodiment of this disclosure;
FIG. 2 is a flowchart 1 of a time calibration method according to an embodiment of this disclosure;
FIG. 3 is a flowchart 2 of a time calibration method according to an embodiment of this disclosure;
FIG. 4 is a schematic structural diagram 1 of a terminal according to an embodiment of this disclosure; and
FIG. 5 is a schematic structural diagram 2 of a terminal according to an embodiment of this disclosure.

### DESCRIPTION OF EMBODIMENTS

The following clearly and completely describes the technical solutions in the embodiments of this disclosure with reference to the accompanying drawings in the embodiments of this disclosure. Apparently, the described embodiments are merely a part rather than all of the embodiments of this disclosure. All other embodiments that a person of ordinary skill in the art obtains without creative efforts based on the embodiments of this disclosure shall fall within the protection scope of this disclosure.

In the specification and claims of this application, the terms "including", and any other variants mean to cover a non-exclusive inclusion. For example, a process, method, system, product, or device that includes a list of steps or units is not necessarily limited to those steps or units, but may include other steps or units not expressly listed or inherent to such a process, method, system, product, or device. In addition, the term "and/or" used in the specification and claims indicates at least one of connected objects. For example, "A and/or B" represents the following three cases: only A, only B, and both A and B.

In the embodiments of this disclosure, terms such as "an example" or "for example" are used to represent examples, illustrations, or explanations. Any embodiment or design solution described as "an example" or "for example" in the embodiments of this disclosure shall not be interpreted to be more preferential or advantageous than other embodiments or design solutions. Specifically, the terms such as "an example" or "for example" are used to present related concepts in a specific manner.

For better understanding the embodiments of this disclosure, the following describes two technical points.

### 1. Description about reference time provided by a network

In a long term evolution (Long Term Evolution, LTE) system, a network side transmits system information (for example, a system information block 16 (System Information Block 16, SIB16)) to a terminal, where the system information may indicate reference time (for example, T_{reference}), including:
(1) coordinated universal time (Coordinated Universal Time, UTC);
(2) daylight saving time or summer time (Daylight Saving Time, DST);
(3) global positioning system (Global Positioning System, GPS) time; or
(4) local time.

When the terminal receives the reference time, to ensure a consistent understanding about terminal-side time and network-side time, a protocol prescribes that a time position corresponding to the reference time received by the terminal is: a boundary of a system frame number (System Frame Number, SFN) in which an end boundary of a system information transmission window of the system information is located. For example, the SIB16 in which the terminal receives the reference time is in a position (SFN_2, Subframe_1), and the system information transmission window of the SIB16 is 10 subframes (subframes, where one SFN includes 10 subframes). In this case, the end boundary of the system information window corresponding to the SIB16 in which the terminal receives the reference time is (SFN_3, Subframe_1), and the reference time received by the terminal is correspondingly end boundary time of the SFN_3.

### 2. Description about uplink timing

After the terminal receives a downlink signal, the terminal may determine a subframe position of the downlink signal. To avoid uplink interference, the network needs to ensure that signals transmitted by different terminals arrive at fixed moments. Therefore, the network side needs to configure an uplink timing advance (Timing Advance, TA) value for uplink transmission of the terminal. After the terminal receives the TA value, if the terminal needs to transmit an uplink signal, the terminal advances uplink signal transmission by the TA value by using the position of the downlink subframe for reference.

About obtaining of the TA value: The terminal needs to obtain the TA value only when the terminal is out of synchronization in the uplink. Therefore, the terminal may trigger the terminal itself to initiate a random access procedure, or the network side triggers the terminal to initiate a random access procedure, and the network side delivers the TA value in a random access response to the terminal.

About maintenance of the TA value: Because a location of the terminal changes constantly, validity of the TA value needs to be maintained. Maintenance of the TA value on the network side: A timer (for example, a time alignment timer (Time Alignment Timer, TAT)) may be set for the TA value of the terminal. The timer is started when the TA value is delivered to the terminal. Before the timer expires, the network side delivers a new TA value to the terminal. Maintenance of the TA value on the terminal: Based on the timer set by the network side, the terminal starts or restarts the timer when receiving the TA value. After the timer expires, the terminal considers that the TA value is invalid, and the terminal is out of synchronization in the uplink and cannot transmit any uplink signal in an uplink-out-of-synchronization cell any longer.

Technologies described in this specification are not limited to an LTE/LTE-Advanced (LTE-Advanced, LTE-A) system, but may also be applied to various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems, for example, a 5th Generation (5th-generation, 5G) mobile communications system and a later evolved communications system.

The terms "system" and "network" are usually used interchangeably. The CDMA system can implement radio technologies such as CDMA2000 and universal terrestrial radio access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communications (Global System for Mobile Communications, GSM). The OFDMA system can implement radio technologies such as ultra mobile broadband (Ultra Mobile Broadband, UMB), evolved UTRA (Evolution-UTRA, E-UTRA), IEEE 802.11 (Wireless Fidelity (Wi-Fi)), IEEE 802.16 (WiMAX), IEEE 802.20, and Flash-OFDM. The UTRA and E-UTRA are parts of a universal mobile telecommunications system (Universal Mobile Telecommunications System, UMTS). The LTE and more advanced LTE (such as LTE-A) are new UMTS releases that use the E-UTRA. The UTRA, E-UTRA, UMTS, LTE, LTE-A, and GSM are cited from descriptions of the documentation by the organization named "3rd Generation Partnership Project" (3rd Generation Partnership Project, 3GPP). The CDMA2000 and UMB are cited from descriptions of the documentation by the organization named "3rd Generation Partnership Project 2" (3GPP2). The technologies described in this specification may be used for the foregoing systems and radio technologies, and may also be used for other systems and radio technologies.

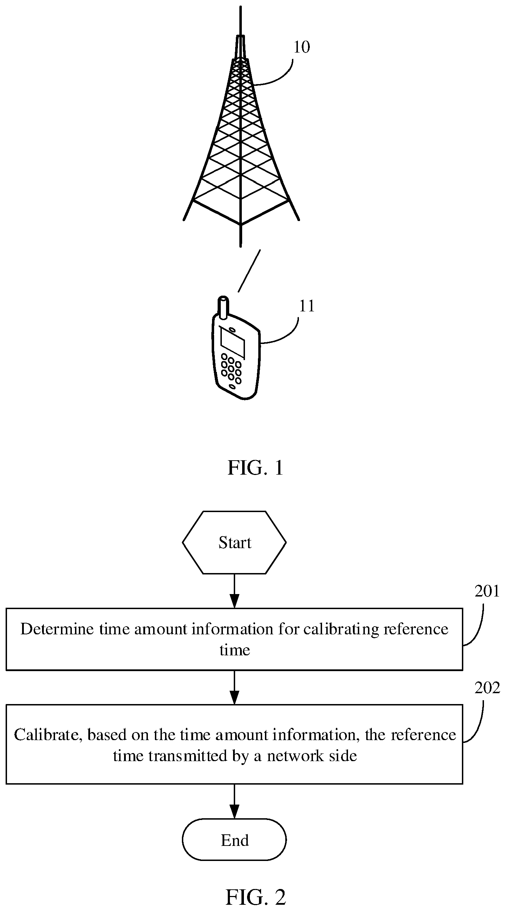

The following describes the embodiments of this disclosure with reference to the accompanying drawings. A time calibration method and a device provided in the embodiments of this disclosure may be applied to a wireless communications system. FIG. 1 is a schematic architectural diagram of a wireless communications system according to an embodiment of this disclosure. As shown in FIG. 1, the wireless communications system may include a network device 10 and a terminal. For example, the terminal is marked as user equipment (User Equipment, UE) 11. The UE 11 may perform communication (signaling transmission or data transmission) with the network device 10. In an actual application, a connection between the foregoing devices may be a wireless connection. To conveniently and visually represent a connection relationship between the devices, a solid line is used in FIG. 1. It should be noted that the communications system may include a plurality of UEs 11, and the network device 10 may communicate with the plurality of UEs 11.

The terminal provided in this embodiment of this disclosure may be a mobile phone, a tablet computer, a notebook computer, an ultra-mobile personal computer (Ultra-Mobile Personal Computer, UMPC), a netbook, a personal digital assistant (Personal Digital Assistant, PDA), a mobile Internet device (Mobile Internet Device, MID), a wearable device (Wearable Device), an in-vehicle device, or the like.

The network device 10 provided in this embodiment of this disclosure may be a base station. The base station may be a generally used base station, or may be an evolved base station (evolved node base station, eNB), or may be a device such as a network device in a 5G system (for example, a next generation base station (next generation node base station, gNB) or a transmission and reception point (transmission and reception point, TRP)).

Referring to FIG. 2, an embodiment of this disclosure provides a time calibration method. The method may be performed by a terminal. Specific steps are as follows:
Step 201: Determine time amount information for calibrating reference time.

The time amount information may be determined based on a requirement of the terminal on reference time accuracy. It can be understood that a specific manner of determining the time amount information for calibrating the reference time is not limited in this embodiment of this disclosure.

Step 202: Calibrate, based on the time amount information, the reference time transmitted by a network side.

For example, based on the time amount information (T_{delta}) for calibrating the reference time, which is determined in step 201, and reference time information (T_{reference}) that is transmitted by the network side and received by the terminal, the terminal obtains actual time information (Tᵣₑₐₗ) through calculation, for example, Tᵣₑₐₗ = T_{reference} - T_{delta}. Certainly, it can be understood that the reference time transmitted by the network side may also be calibrated by using other calculation manners and the time amount information in this embodiment of this disclosure. This is not limited.

In this embodiment of this disclosure, optionally, the determining time amount information for calibrating reference time includes: when a trigger event is satisfied, determining the time amount information for calibrating the reference time, where the trigger event is an event for triggering the terminal to calibrate the reference time.

The trigger event may be a related event indicated by the network side, or a related event detected by the terminal. It can be understood that specific content and a setting manner of the trigger event are not specifically limited in this embodiment of this disclosure.

In this embodiment of this disclosure, optionally, a downlink transmission latency is determined, and then the downlink transmission latency is determined as the time amount information for calibrating the reference time. The following two manners may be included.
Manner 1:
   obtaining a downlink path loss (Pathloss_{DL}) of the terminal in signal reception, where for example, the terminal obtains, through calculation, the downlink path loss (Pathloss_{DL}) of the terminal in signal reception, and the terminal may use a calculation manner of a related art, which is not described herein;
   obtaining, based on a correspondence between downlink path loss and downlink signal transmission latency, a downlink signal transmission latency (T_{DL}) corresponding to the downlink path loss of the terminal in signal reception; and
   determining the downlink signal transmission latency as the time amount information for calibrating the reference time (for example, T_{delta} = T_{DL}).

   In this embodiment of this disclosure, optionally, the correspondence between downlink path loss (for example, (Pathloss_{DL} = 1 dB)) and downlink signal transmission latency (for example, T_{DL} = 10 µs) may be configured by the network side or prescribed by a protocol.
Manner 2:
   obtaining a corresponding downlink signal transmission latency (T_{DL}) based on a timing advance (Timing Advance, TA) value and a correspondence between TA value and downlink signal transmission latency; and
   determining the downlink signal transmission latency as the time amount information for calibrating the reference time.

For example, a TA value of an uplink signal of the terminal is 10 µs, and the correspondence between TA value and downlink signal transmission latency is TA/2, that is, T_{delta} = TA/2 = 5 µs.

In this embodiment of this disclosure, optionally, the correspondence between timing advance value and downlink signal transmission latency may be configured by the network side or prescribed by a protocol.

In this embodiment of this disclosure, optionally, the timing advance value for determining the time amount information includes any one of the following:
(1) a TA value received in a random access procedure;
(2) a TA value received in a timing advance command (Timing Advance Command, TAC) media access control (Media Access Control, MAC) control element (Control Element, CE) transmitted by the network side; and
(3) a valid TA value of the terminal, for example, a TA value currently available to the terminal, where for example, a TAT timer corresponding to the timing advance value is running.

In this embodiment of this disclosure, optionally, time of receiving the timing advance value in the random access procedure is the same as time of calculating the time amount information; or time of receiving the timing advance value in the random access procedure is advanced, by preset time, from time of calculating the time amount information.

The receiving time and the calculating time correspond to different time points.

In this embodiment of this disclosure, optionally, the preset time is configured by the network side or prescribed by a protocol.

For example, while calculating the time amount information required for calibration, the terminal receives the TA value in the random access procedure (for example, a TA value in a random access response (Random Access Response, RAR)), or receives the TA value in the timing advance command media access control control element transmitted by the network side.

For example, in a period of time before calculating the time amount information required for calibration, the terminal receives the TA value in the random access procedure (for example, a TA value in a RAR), or receives the TA value in the timing advance command media access control control element transmitted by the network side. A time amount of the "period of time before calculating the time amount information required for calibration" is prescribed by a protocol or configured by the network.

In this embodiment of this disclosure, optionally, the determining the time amount information for calibrating reference time further includes the following steps:
triggering a random access procedure or another uplink signal (for example, physical uplink control channel (Physical Uplink Control Channel, PUCCH), physical uplink shared channel (Physical Uplink Shared Channel, PUSCH), or sounding reference signal (Sounding Reference Signal, SRS)) transmission procedure; and
determining a TA value obtained in the random access procedure or another uplink signal transmission procedure, as a TA value for determining the time amount information.

In this embodiment of this disclosure, the following manner may be used to determine the TA value for calculating the time amount information. Certainly, it can be understood that other manners may also be used. This is not limited.

In this embodiment of this disclosure, optionally, the TA value obtained in the random access procedure or another uplink signal transmission procedure includes either of the following:
(1) the first TA value received in the random access procedure or another uplink signal transmission procedure; and
(2) any one of a plurality of timing advance values received when the random access procedure or another uplink signal transmission procedure succeeds.

For example, the any one of the plurality of timing advance values received when the random access procedure or another uplink signal transmission procedure succeeds may be: the last timing advance value received when the random access procedure or another uplink signal transmission procedure succeeds.

In this embodiment of this disclosure, optionally, a cell corresponding to a random access request (for example, a first message (Msgl)) in the random access procedure includes any one of the following:
(1) a cell transmitting the reference time;
(2) any cell in a timing advance group (Timing Advance Group, TAG) to which the cell transmitting the reference time belongs;
(3) a primary cell (Primary Cell, PCell) in the timing advance group to which the cell transmitting the reference time belongs; and
(4) any secondary cell (Secondary Cell, SCell) in the timing advance group to which the cell transmitting the reference time belongs.

In this embodiment of this disclosure, optionally, a condition for success of the random access procedure includes either of the following:
(1) a second message (Msg2) received by the terminal includes identification information of a first message (Msg1) received by the terminal; and
(2) a fourth message (Msg4) received by the terminal includes identification information of a third message (Msg3) received by the terminal.

In this embodiment of this disclosure, optionally, content of the Msg1 or Msg3 includes either or a combination of the following:
(1) an identity of the terminal, for example, terminal identity information transmitted by using a radio resource control (Radio Resource Control, RRC) message (for example, a timing request (Timing Request) message) or a MAC CE; and
(2) timing advance value request information, for example, TA request information transmitted by using an RRC message (Timing Request message) or a MAC CE, for example, a timing request ID, for example, an identity randomly generated based on a timing request ID range prescribed by a protocol or configured by the network.

In this embodiment of this disclosure, optionally, the trigger event is configured by the network side or prescribed by a protocol.

In this embodiment of this disclosure, optionally, the trigger event includes any one or a combination of the following:
(1) the terminal detects that the reference time is inaccurate;
(2) the terminal receives information from the network side indicating that the reference time is inaccurate; and
(3) the terminal determines that a transmitted or received service is a specific service, where the specific service may be a service that requires higher time accuracy, for example, industrial control service data, but certainly, this is not limited.

In this embodiment of this disclosure, optionally, a criterion for determining that the terminal detects that the reference time is inaccurate includes any one of the following:
(1) a path loss measured by the terminal is greater than or equal to a first threshold;
(2) a variation of the path loss measured by the terminal is greater than or equal to a second threshold;
(3) an uplink timing advance measured by the terminal is greater than or equal to a third threshold;
(4) a variation of the uplink timing advance measured by the terminal is greater than or equal to a fourth threshold; and
(5) the terminal detects expiry of a timer started after reference time calibration is performed; specifically, after the terminal performs the reference time calibration based on a setting of the timer configured by the network or prescribed by a protocol, the terminal starts the timer, and after the timer expires, the terminal considers that the reference time is inaccurate.

In this embodiment of this disclosure, optionally, any one or a combination of the first threshold, the second threshold, the third threshold, and the fourth threshold is configured by the network side or prescribed by a protocol. It can be understood that the foregoing threshold is not limited in this embodiment of this disclosure.

In this embodiment of this disclosure, optionally, the information from the network side indicating that the reference time is inaccurate includes any one or a combination of the following:
(1) frequency information for receiving the reference time, indicated by the network side, where for example, if the terminal receives the reference time in corresponding frequency information, it is considered that the reference time is inaccurate and needs to be calibrated;
(2) geographical location information for receiving the reference time, indicated by the network side, where for example, if the terminal receives the reference time in corresponding geographical location information, it is considered that the reference time is inaccurate and needs to be calibrated; and
(3) beam information for receiving the reference time, indicated by the network side, where for example, if the terminal receives the reference time in corresponding beam information, it is considered that the reference time is inaccurate and needs to be calibrated.

In this embodiment of this disclosure, optionally, the frequency information includes any one or a combination of the following:
(1) a frequency identifier;
(2) a frequency band identifier;
(3) a bandwidth identifier; and
(4) a bandwidth part identifier.

In this embodiment of this disclosure, optionally, the geographical location information includes any one or a combination of the following:
(1) a cell identity, for example, a physical cell identifier (Physical Cell Identifier, PCI), or a cell global identifier (Cell Global Identifier, CGI);
(2) a cell group identity, for example, a master cell group (Master Cell Group, MCG), or a secondary cell group (Secondary Cell Group, SCG);
(3) an area location identity, for example, a tracking area identity (Tracking Area Identity, TAI), or an access network notification area (RAN Notification Area, RNA) identity; and
(4) an operator identity, for example, a public land mobile network (Public Land Mobile Network, PLMN).

In this embodiment of this disclosure, optionally, the beam information includes either or a combination of the following:
(1) a reference signal identifier, for example, a channel state information reference signal (Channel State Information Reference Signal, CSI-RS) identifier; and
(2) a synchronization signal block (Synchronous Signal Block, SSB) identifier.

In this embodiment of this disclosure, optionally, the determining the time amount information for calibrating reference time includes the following steps:
transmitting request information to the network side, for example, a physical random access channel (Physical Random Access Channel, PRACH), a physical uplink control channel (Physical Uplink Control Channel, PUCCH), a physical uplink shared channel (Physical Uplink Shared Channel, PUSCH), a sounding reference signal (Sounding Reference Signal, SRS), a radio resource control (Radio Resource Control, RRC) message, or a MAC CE;
receiving, from the network side, a time amount for calibration, for example, Tx = 10 µs; and
determining the time amount for calibration as the time amount information (T_{delta}) for calibrating the reference time, for example, T_{delta} = Tx/N, where N may be a real number such as 1, 1.5, or 2, but certainly, it can be understood that a value of N is not limited.

In this embodiment of this disclosure, optionally, a time position corresponding to the reference time transmitted by the network side is configured by the network side or prescribed by a protocol.

In this embodiment of this disclosure, optionally, the time position corresponding to the reference time transmitted by the network side is a boundary of a system frame number in which an end boundary of a system information transmission window is located, where the system information is used for transmitting the reference time.

In this embodiment of this disclosure, optionally, the time position corresponding to the reference time transmitted by the network side is a position of a signal for time synchronization of the reference time.

In this embodiment of this disclosure, optionally, a transmission mode of the signal for time synchronization of the reference time is a periodic transmission mode or an event-triggered transmission mode.

In this embodiment of this disclosure, optionally, a resource configuration of the signal for time synchronization of the reference time is configured by the network side or prescribed by a protocol.

In this embodiment of this disclosure, optionally, the resource configuration of the signal for time synchronization of the reference time includes any one or a combination of the following:
(1) a transmission time interval, for example, 10 ms;
(2) a transmission time start position, for example, subframe 1 or slot 1;
(3) an offset relative to the transmission time start position, where for example, for two subframes after subframe 1 (for example, transmission in subframe 3), an offset is two subframes;
(4) transmission frequency information, for example, 2 GHz;
(5) a width of a transmission frequency band, for example, 20 MHz; and
(6) a transmission frequency domain pattern.

In this embodiment of this disclosure, the terminal can calibrate the reference time transmitted by the network side, to improve accuracy of the reference time received by the terminal.

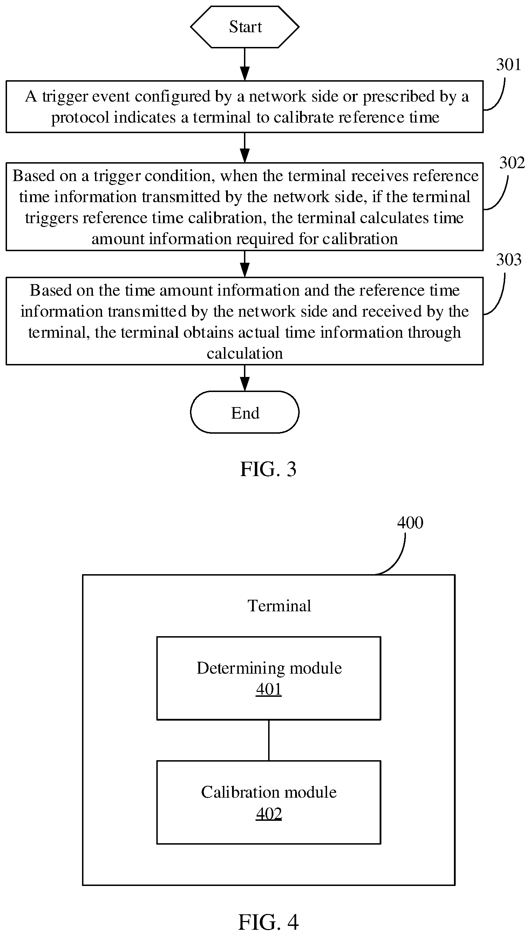

Referring to FIG. 3, an embodiment of this disclosure further provides a time calibration method, including step 301 to step 303. Specific steps are as follows:

Step 301: A trigger event configured by a network side or prescribed by a protocol indicates a terminal to calibrate reference time.

The trigger event for triggering the terminal to calibrate the reference time may include either of the following:
(1) the terminal detects that the reference time is inaccurate; and
(2) the network indicates that the reference time is inaccurate.

Further, the trigger event may further include: the terminal determines that a service transmitted or received by the terminal requires higher time accuracy. For example, the terminal requires accurate time information when receiving or transmitting industrial control service data. In this case, if the terminal satisfies the foregoing trigger event, the terminal is triggered to calibrate the reference time.

A criterion for determining that the terminal detects that the reference time is inaccurate includes any one of the following:
(1) a path loss measured by the terminal is greater than or equal to a threshold, where
   the threshold may be configured by the network or prescribed by the protocol;
(2) a variation of the path loss measured by the terminal is greater than or equal to a threshold, where
   for example, if a path loss when the last reference time calibration is performed is P1, and a current path loss is P2, and a threshold is T, when (P2 - P1) ≥ T, it indicates that the terminal detects that the reference time is inaccurate, where the threshold may be configured by the network or prescribed by the protocol;
(3) an uplink timing advance of the terminal is greater than or equal to a threshold,
   where the threshold may be configured by the network or prescribed by the protocol;
(4) a variation of the uplink timing advance measured by the terminal is greater than or equal to a threshold, where
   for example, if the last uplink timing advance is TA1, and a current uplink timing advance is TA2, and a threshold is T, when (TA2 - TA1) ≥ T, it indicates that the terminal detects that the reference time is inaccurate, where the threshold may be configured by the network or prescribed by the protocol; and
(5) after the terminal performs reference time calibration based on a setting of a timer configured by the network or prescribed by the protocol, the terminal starts the timer, and after the timer expires, the terminal considers that the reference time is inaccurate.

Information content of "the network indicates that the reference time is inaccurate" includes any one or a combination of the following:
(1) corresponding frequency information for transmitting the reference time, where for example, if the reference time is received in a corresponding frequency, it is considered that the reference time is inaccurate and needs to be calibrated;
(2) corresponding geographical location information for transmitting the reference time, where for example, if the reference time is received in a corresponding geographical location, it is considered that the reference time is inaccurate and needs to be calibrated; and
(3) corresponding beam information for transmitting the reference time, where for example, if the reference time is received in a corresponding beam, it is considered that the reference time is inaccurate and needs to be calibrated.

The "corresponding frequency information for transmitting the reference time" includes any one or a combination of the following:
(1) a frequency identifier, for example, a frequency;
(2) a frequency band identifier, for example, a frequency band;
(3) a bandwidth identifier, for example, a bandwidth; and
(4) a bandwidth part identifier, for example, a BWP ID.

The "corresponding geographical location information for transmitting the reference time" includes any one or a combination of the following:
(1) a cell identity, for example, a physical cell identifier (Physical Cell Identifier, PCI), or a cell global identifier (Cell Global Identifier, CGI);
(2) a cell group identity, for example, a master cell group (Master Cell Group, MCG), or a secondary cell group (Secondary Cell Group, SCG);
(3) an area location identity, for example, a tracking area identity (Tracking Area Identity, TAI), or an access network notification area (RAN Notification Area, RNA) identity; and
(4) an operator identity, for example, a public land mobile network (Public Land Mobile Network, PLMN).

The "corresponding beam information for transmitting the reference time" includes either or a combination of the following:
(1) a reference signal identifier, for example, a channel state information reference signal (Channel State Information Reference Signal, CSI-RS) identifier; and
(2) a synchronization signal block (Synchronous Signal Block, SSB) identifier.

For example, the "corresponding beam information for transmitting the reference time" includes a combination of one or more different CSI-RS identifiers and SSB identifiers.

Further, corresponding to a manner 1 in step 302, the network side may indicate a correspondence between downlink path loss and downlink signal transmission latency. For example, a downlink path loss (Pathloss_{DL} = 1 dB) corresponds to a downlink signal transmission latency (T_{DL} = 10 µs).

Further, corresponding to step 303, a resource configuration of a signal for time synchronization of the reference time transmitted by the network is configured by the network side or prescribed by the protocol, where the resource configuration includes any one or a combination of the following:
(1) a transmission time interval, for example, 10 ms;
(2) a transmission time start position, for example, subframe 1 or slot 1;
(3) an offset relative to the transmission time start position, where for example, for two subframes after subframe 1 (for example, transmission in subframe 3), an offset is two subframes;
(4) transmission frequency information, for example, 2 GHz;
(5) a width of a transmission frequency band, for example, 20 MHz; and
(6) a transmission frequency domain pattern.

Continuous transmission may be performed in a frequency band range of transmission. For example, transmission is performed in each frequency domain resource position in a frequency band range (for example, in a range of 20 MH) of transmission in slot 1. Alternatively, transmission is performed at a frequency interval in a frequency band range of transmission. For example, transmission is performed once every 60 kHz in a frequency band range (for example, in a range of 20 MH) of transmission in slot 1.

Step 302: Based on a trigger condition in step 301, when the terminal receives reference time information (for example, T_{reference}) transmitted by the network side, if the terminal triggers reference time calibration, the terminal calculates time amount information (for example, T_{delta}) required for calibration, where a calculation manner of the "calculating time amount information required for calibration" includes any one of the following:
Manner 1: The terminal calculates a downlink path loss (for example, Pathloss_{DL}) of the terminal in signal reception, and obtains a downlink signal transmission latency (for example, T_{DL}) through conversion based on the downlink path loss, where the conversion method is prescribed by the protocol or indicated by the network (for example, a downlink path loss (Pathloss_{DL} = 1 dB) corresponds to a downlink signal transmission latency (for example, T_{DL} = 10 µs)). The terminal uses the "signal transmission latency" as the "time amount information required for calibration" (for example, T_{delta} = TDL).
Manner 2: The terminal determines a current timing advance (Timing Advance, TA) value that may be used to calculate the "time amount information required for calibration".
   For example, an uplink transmission timing advance of an uplink signal of the terminal is 10 µs, and the terminal converts the TA value into a signal transmission latency (for example, TA/2). The terminal uses the "signal transmission latency" as the "time amount information required for calibration" (for example, T_{delta} = TA/2 = 5 µs).
Manner 3: The terminal transmits "request information for a time amount for calibration" (for example, a physical random access channel (Physical Random Access Channel, PRACH), a physical uplink control channel (Physical Uplink Control Channel, PUCCH), a physical uplink shared channel (Physical Uplink Shared Channel, PUSCH), a sounding reference signal (Sounding Reference Signal, SRS), a radio resource control (Radio Resource Control, RRC) message, or a MAC CE), and the network side transmits the "time amount for calibration" to the terminal based on the "request information for the time amount for calibration" (for example, Tx = 10 µs). The terminal uses the "time amount for calibration" as the "time amount information required for calibration", for example, T_{delta} = Tx/N, where N may be a real number such as 1, 1.5, or 2.

For the manner 2, a manner of determining, by the terminal, the TA value that may be used to calculate the "time amount information required for calibration" includes any one of the following:
(1) while calculating the time amount information required for calibration, the terminal receives a TA value in a random access procedure (for example, a TA value in a random access response (Random Access Response, RAR)), or receives a TA value in a TAC MAC CE transmitted by the network side;
(2) in a period of time before calculating the time amount information required for calibration, the terminal receives a TA value in a random access procedure (for example, a TA value in a RAR), or receives a TA value in a timing advance command media access control control element transmitted by the network side, where a time amount of the "period of time before calculating the time amount information required for calibration" is prescribed by the protocol or configured by the network; and
(3) the terminal currently has an available TA value (for example, a TAT timer corresponding to the TA value is running).

Optionally, for the manner 2, when the terminal determines that there is no TA value that may be used to calculate the "time amount information required for calibration", the terminal triggers a random access procedure (or another uplink signal (for example, PUCCH/PUSCH/SRS) transmission procedure). After the terminal obtains a TA value by performing the random access procedure (or another uplink signal (for example, PUCCH/PUSCH/SRS) transmission procedure), the terminal determines that the TA value obtained in the random access procedure (or another uplink signal (for example, PUCCH/PUSCH/SRS) transmission procedure) is the TA value that may be used to calculate the "time amount information required for calibration".

The "TA value obtained in the random access procedure (or another uplink signal (for example, PUCCH/PUSCH/SRS) transmission procedure)" is any one of the following:
(1) the first TA value received (for example, a TA value received in a RAR after the terminal transmits a random access request);
(2) the last TA value received when the random access procedure (or another uplink signal (for example, PUCCH/PUSCH/SRS) transmission procedure) succeeds, where
   for example, before the random access procedure succeeds, the terminal has attempted two random access procedures and received two TA values in the two random access procedures, and the second random access attempt succeeds; in this case, a TA value obtained in the second random access attempt is the TA value that may be used to calculate the "time amount information required for calibration"; and
(3) any one of a plurality of TA values received when the random access procedure (or another uplink signal (for example, PUCCH/PUSCH/SRS) transmission procedure) succeeds, where
   for example, before the random access procedure succeeds, the UE has attempted two random access procedures and received two TA values in the two random access procedures, and the second random access attempt succeeds; in this case, the terminal considers that either of the two TA values is the TA value that may be used to calculate the "time amount information required for calibration".

A condition for determining success of the random access procedure includes:
(1) a second message (Msg2) received by the terminal includes identification information of a first message (Msg1) received by the terminal, for example, a preamble (Preamble) identifier; and
(2) a fourth message (Msg4) received by the terminal includes identification information of a third message (Msg3) received by the terminal, where for example, a contention resolution identifier of the Msg4 matches content of the Msg3, for example, including request identifier information when the terminal in a connected state or an idle state requests the TA.

A cell corresponding to a random access request (that is, the Msgl) in the random access procedure includes any one of the following:
(1) a cell transmitting the reference time;
(2) any cell in a timing advance group (Timing Advance Group, TAG) to which the cell transmitting the reference time belongs;
(3) a primary cell (Primary Cell, PCell) in the TAG to which the cell transmitting the reference time belongs; and
(4) any secondary cell (Secondary Cell, SCell) in the TAG to which the cell transmitting the reference time belongs.

Content of the Msg1 or Msg3 in the random access procedure includes either or a combination of the following:
(1) an identity of the terminal, for example, terminal identity information transmitted by using an RRC message (a timing request (Timing Request) message) or a MAC CE; and
(2) TA request information, for example, TA request information transmitted by using an RRC message (Timing Request message) or a MAC CE, for example, a timing request ID, for example, an identity randomly generated based on a timing request ID range prescribed by the protocol or configured by the network.

Step 303: Based on the "time amount information (for example, T_{delta}) for calibrating the reference time" that is obtained in step 302 and the "reference time information (T_{reference}) transmitted by the network side" and received by the terminal, the terminal obtains actual time information (Tᵣₑₐₗ) through calculation.

For example, Tᵣₑₐₗ = T_{reference} - T_{delta}.

The "reference time information (T_{reference}) transmitted by the network side" is time information of a moment agreed upon by the terminal and the network side.

For example, the protocol prescribes that a time position corresponding to the reference time received by the terminal is:
a boundary of an SFN (System Frame Number, system frame number) in which an end boundary of a system information transmission window of system information for transmitting the reference time is located.

For example, a SIB16 in which the terminal receives the reference time is in a position (SFN_2, Subframe_1), and a system information transmission window of the SIB16 is 10 subframes (subframes, where one SFN includes 10 subframes). In this case, an end boundary of the system information window corresponding to the SIB16 in which the terminal receives the reference time information is (SFN_3, Subframe_1), and the reference time received by the terminal is correspondingly end boundary time of the SFN_3.

For another example, the protocol prescribes that the time position corresponding to the reference time received by the terminal is a position of a signal for time synchronization of the reference time, where the signal for time synchronization may be transmitted periodically or in an event-triggered mode.

For example, a position of the received reference time information transmitted by the network is subframe 1, and a position of a subsequent "signal for time synchronization of the reference time" that is nearest to the transmission position is subframe 9. In this case, the terminal considers that a start position or an end position of the "signal for time synchronization of the reference time" in subframe 9 is the time position corresponding to the reference time transmitted by the network side.

In this embodiment of this disclosure, the terminal can calibrate the reference time transmitted by the network side, to improve accuracy of the reference time received by the terminal.

An embodiment of this disclosure further provides a terminal. Because a problem-resolving principle of the terminal is similar to that of a time calibration method in an embodiment of this disclosure, for implementation of the terminal, refer to the implementation of the method. Details are not described again herein.

Referring to FIG. 4, an embodiment of this disclosure further provides a terminal. The terminal 400 includes:
a determining module 401, configured to determine time amount information for calibrating reference time; and
a calibration module 402, configured to calibrate, based on the time amount information, the reference time transmitted by a network side.

In this embodiment of this disclosure, optionally, when a trigger event is satisfied, the determining module 401 is further configured to determine the time amount information for calibrating the reference time, where the trigger event is an event for triggering the terminal to calibrate the reference time.

In this embodiment of this disclosure, optionally, the determining module 401 is further configured to:
obtain a downlink path loss of the terminal in signal reception;
obtain, based on a correspondence between downlink path loss and downlink signal transmission latency, a downlink signal transmission latency corresponding to the downlink path loss of the terminal in signal reception; and
determine the downlink signal transmission latency as the time amount information for calibrating the reference time.

In this embodiment of this disclosure, optionally, the correspondence between downlink path loss and downlink signal transmission latency is configured by the network side or prescribed by a protocol.

In this embodiment of this disclosure, optionally, the determining module 401 is further configured to: obtain a downlink signal transmission latency based on a TA value and a correspondence between TA value and downlink signal transmission latency; and determine the downlink signal transmission latency as the time amount information for calibrating the reference time.

In this embodiment of this disclosure, optionally, the timing advance value for determining the time amount information includes any one of the following:
a TA value received in a random access procedure;
a TA value received in a timing advance command media access control control element transmitted by the network side; and
a valid TA value of the terminal, for example, a timing advance value currently available to the terminal.

In this embodiment of this disclosure, optionally, time of receiving the timing advance value in the random access procedure is the same as time of calculating the time amount information; or time of receiving the timing advance value in the random access procedure is advanced, by preset time, from time of calculating the time amount information.

In this embodiment of this disclosure, optionally, the preset time is configured by the network side or prescribed by a protocol.

In this embodiment of this disclosure, optionally, the terminal further includes a triggering module, configured to: trigger a random access procedure or another uplink signal transmission procedure; and determine a TA value obtained in the random access procedure or another uplink signal transmission procedure, as a TA value for determining the time amount information.

In this embodiment of this disclosure, optionally, the timing advance value obtained in the random access procedure or another uplink signal transmission procedure includes either of the following:
the first timing advance value received in the random access procedure or another uplink signal transmission procedure; and
any one of a plurality of timing advance values received when the random access procedure or another uplink signal transmission procedure succeeds, for example, the last timing advance value received when the random access procedure or another uplink signal transmission procedure succeeds.

In this embodiment of this disclosure, optionally, a cell corresponding to a random access request in the random access procedure includes any one of the following:
a cell transmitting the reference time;
any cell in a timing advance group to which the cell transmitting the reference time belongs;
a primary cell in the timing advance group to which the cell transmitting the reference time belongs; and
any secondary cell in the timing advance group to which the cell transmitting the reference time belongs.

In this embodiment of this disclosure, optionally, a condition for success of the random access procedure includes either of the following:
a second message (Msg2) received by the terminal includes identification information of a first message (Msg1) received by the terminal; and
a fourth message (Msg4) received by the terminal includes identification information of a third message (Msg3) received by the terminal.

In this embodiment of this disclosure, optionally, content of the Msg1 or Msg3 includes either or a combination of the following:
an identity of the terminal; and
timing advance value request information.

In this embodiment of this disclosure, optionally, the trigger event is configured by the network side or prescribed by a protocol.

In this embodiment of this disclosure, optionally, the trigger event includes any one or a combination of the following:
the terminal detects that the reference time is inaccurate;
the terminal receives information from the network side indicating that the reference time is inaccurate; and
the terminal determines that a transmitted or received service is a specific service.

In this embodiment of this disclosure, optionally, a criterion for determining that the terminal detects that the reference time is inaccurate includes any one of the following:
a path loss measured by the terminal is greater than or equal to a first threshold;
a variation of the path loss measured by the terminal is greater than or equal to a second threshold;
an uplink timing advance measured by the terminal is greater than or equal to a third threshold;
a variation of the uplink timing advance measured by the terminal is greater than or equal to a fourth threshold; and
the terminal detects expiry of a timer started after reference time calibration is performed.

In this embodiment of this disclosure, optionally, any one or a combination of the first threshold, the second threshold, the third threshold, and the fourth threshold is configured by the network side or prescribed by a protocol.

In this embodiment of this disclosure, optionally, the information from the network side indicating that the reference time is inaccurate includes any one or a combination of the following:
frequency information for receiving the reference time, indicated by the network side;
geographical location information for receiving the reference time, indicated by the network side; and
beam information for receiving the reference time, indicated by the network side.

In this embodiment of this disclosure, optionally, the frequency information includes any one or a combination of the following:
a frequency identifier;
a frequency band identifier;
a bandwidth identifier; and
a bandwidth part identifier.

In this embodiment of this disclosure, optionally, the geographical location information includes any one or a combination of the following:
a cell identity;
a cell group identity;
an area location identity; and
an operator identity.

In this embodiment of this disclosure, optionally, the beam information includes either or a combination of the following:
a reference signal identifier; and
a synchronization signal block identifier.

In this embodiment of this disclosure, optionally, the determining module is further configured to:
transmit request information to the network side;
receive, from the network side, a time amount for calibration; and
determine the time amount for calibration as the time amount information for calibrating the reference time.

In this embodiment of this disclosure, optionally, a time position corresponding to the reference time transmitted by the network side is configured by the network side or prescribed by a protocol.

In this embodiment of this disclosure, optionally, the time position corresponding to the reference time transmitted by the network side is a boundary of a system frame number in which an end boundary of a system information transmission window is located, where the system information is used for transmitting the reference time.

In this embodiment of this disclosure, optionally, the time position corresponding to the reference time transmitted by the network side is a position of a signal for time synchronization of the reference time.

In this embodiment of this disclosure, optionally, a transmission mode of the signal for time synchronization of the reference time is a periodic transmission mode or an event-triggered transmission mode.

In this embodiment of this disclosure, optionally, a resource configuration of the signal for time synchronization of the reference time is configured by the network side or prescribed by the protocol.

In this embodiment of this disclosure, optionally, the resource configuration of the signal for time synchronization of the reference time includes any one or a combination of the following:
a transmission time interval;
a transmission time start position;
an offset relative to the transmission time start position;
transmission frequency information;
a width of a transmission frequency band; and
a transmission frequency domain pattern.

The terminal provided in this embodiment of this disclosure may perform the foregoing method embodiment. An implementation principle and a technical effect thereof are similar to those of the method embodiment. Details are not described again herein in this embodiment.

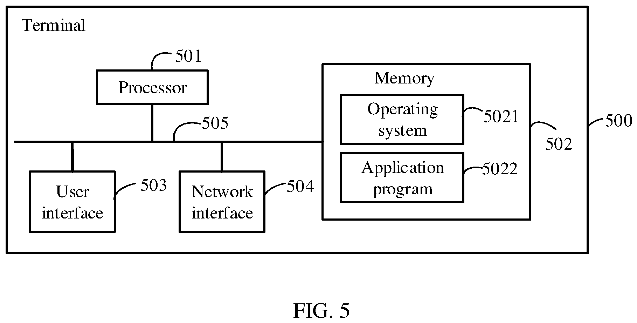

As shown in FIG. 5, a terminal 500 includes at least one processor 501, a memory 502, at least one network interface 504, and a user interface 503. The components of the terminal 500 are coupled together by using a bus system 505. It can be understood that the bus system 505 is configured to implement connection and communication between these components. The bus system 505 further includes a power bus, a control bus, and a status signal bus, in addition to a data bus. However, for clarity of description, various buses are marked as the bus system 505 in FIG. 5.

The user interface 503 may include a display, a keyboard, a pointing device (for example, a mouse or a trackball (trackball)), a touch panel, or a touchscreen.

It can be understood that the memory 502 in this embodiment of this disclosure may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), which is used as an external cache. For example but not for restrictive description, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 502 in the system and method described in this embodiment of this disclosure is intended to include but is not limited to these and any other suitable types of memories.

In some implementations, the memory 502 stores the following elements: executable modules or data structures, or a subset thereof, or an extended set thereof: an operating system 5021 and an application program 5022.

The operating system 5021 includes various system programs, such as a framework layer, a kernel library layer, and a driver layer, for implementing various basic services and processing hardware-based tasks. The application program 5022 includes various application programs, such as a media player (Media Player) and a browser (Browser), for implementing various application services. A program for implementing a method in an embodiment of this disclosure may be included in the application program 5022.

In an embodiment of this disclosure, a program or an instruction stored in the memory 502, which may be specifically a program or an instruction stored in the application program 5022, is invoked, and the following steps are implemented during execution: determining time amount information for calibrating reference time; and calibrating, based on the time amount information, the reference time transmitted by a network side.

The terminal provided in this embodiment of this disclosure may perform the foregoing method embodiment. An implementation principle and a technical effect thereof are similar to those of the method embodiment. Details are not described again herein in this embodiment.

Method or algorithm steps described in combination with the content disclosed in this disclosure may be implemented by hardware, or may be implemented by a processor by executing a software instruction. The software instruction may include a corresponding software module. The software module may be stored in a RAM, a flash memory, a ROM, an EPROM, an EEPROM, a register, a hard disk, a removable hard disk, a CD-ROM, or a storage medium of any other form well known in the art. For example, a storage medium is coupled to the processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may exist in the core network interface device as discrete components.

A person skilled in the art should be aware that in the foregoing one or more examples, functions described in this disclosure may be implemented by hardware, software, firmware, or any combination thereof. When implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another place. The storage medium may be any usable medium accessible to a general-purpose or special-purpose computer.

The objectives, technical solutions, and beneficial effects of this disclosure are further described in detail in the foregoing specific implementations. It should be understood that the foregoing descriptions are merely specific implementations of this disclosure, and are not intended to limit the protection scope of this disclosure. Any modification, equivalent replacement, improvement, or the like made based on the technical solutions in this disclosure shall fall within the protection scope of this disclosure.

A person skilled in the art should understand that the embodiments of this disclosure may be provided as a method, a system, or a computer program product. Therefore, the embodiments of this disclosure may be hardware-only embodiments, software-only embodiments, or embodiments with a combination of software and hardware. Moreover, the embodiments of this disclosure may use a form of a computer program product that is implemented on one or more computer-usable storage media (including but not limited to a disk memory, a CD-ROM, an optical memory, and the like) that include computer usable program code.

A person of ordinary skill in the art may be aware that the units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described again herein.

In the embodiments provided in this disclosure, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this disclosure essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the method described in the embodiments of this disclosure. The foregoing storage medium includes: any medium that can store program code, such as a USB flash drive, a removable hard disk, a ROM, a RAM, a magnetic disk, or an optical disc.

It can be understood that the embodiments described in the embodiments of this disclosure may be implemented by hardware, software, firmware, middleware, microcode, or a combination thereof. For hardware implementation, the processing unit may be implemented in one or more application specific integrated circuits (Application Specific Integrated Circuit, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general purpose processors, controllers, microcontrollers, microprocessors, and other electronic units for performing the functions described in this disclosure, or a combination thereof.

For software implementation, the technologies described in the embodiments of this disclosure may be implemented by modules (for example, processes or functions) that perform the functions described in the embodiments of this disclosure. Software code may be stored in the memory and executed by the processor. The memory may be implemented in or outside the processor.

The embodiments of this disclosure are described with reference to the flowcharts and/or block diagrams of the method, the device (system), and the computer program product according to the embodiments of this disclosure. It should be understood that computer program instructions may be used to implement each process and/or each block in the flowcharts and/or the block diagrams, or a combination of a process and/or a block in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Apparently, a person skilled in the art may make various changes and variations to the embodiments of this disclosure without departing from the spirit and scope of this disclosure. Therefore, this disclosure is intended to cover the changes and variations provided that the changes and variations of the embodiments of this disclosure fall within the scope of the claims of this disclosure or equivalent technologies thereof.

## Claims

1. A time calibration method, applied to a terminal, wherein the method comprises:
determining time amount information for calibrating reference time; and
calibrating, based on the time amount information, the reference time transmitted by a network side.

2. The method according to claim 1, wherein the determining time amount information for calibrating reference time comprises:
when a trigger event is satisfied, determining the time amount information for calibrating the reference time, wherein the trigger event is an event for triggering the terminal to calibrate the reference time.

3. The method according to claim 1, wherein the determining the time amount information for calibrating reference time comprises:
obtaining a downlink path loss of the terminal in signal reception;
obtaining, based on a correspondence between downlink path loss and downlink signal transmission latency, a downlink signal transmission latency corresponding to the downlink path loss of the terminal in signal reception; and
determining the downlink signal transmission latency as the time amount information for calibrating the reference time.

4. The method according to claim 3, wherein the correspondence between downlink path loss and downlink signal transmission latency is configured by the network side or prescribed by a protocol.

5. The method according to claim 1, wherein the determining the time amount information for calibrating reference time comprises:
obtaining a downlink signal transmission latency based on a timing advance TA value and a correspondence between TA value and downlink signal transmission latency; and
determining the downlink signal transmission latency as the time amount information for calibrating the reference time.

6. The method according to claim 5, wherein the TA value comprises any one of the following:
a TA value received in a random access procedure;
a TA value received in a timing advance command media access control control element transmitted by the network side; and
a valid TA value of the terminal.

7. The method according to claim 6, wherein
time of receiving the TA value in the random access procedure is the same as time of calculating the time amount information; or
time of receiving the TA value in the random access procedure is advanced, by preset time, from time of calculating the time amount information.

8. The method according to claim 7, wherein the preset time is configured by the network side or prescribed by a protocol.

9. The method according to claim 5, wherein the determining the time amount information for calibrating reference time further comprises:
triggering a random access procedure or another uplink signal transmission procedure; and
determining a TA value obtained in the random access procedure or another uplink signal transmission procedure, as a TA value for determining the time amount information.

10. The method according to claim 9, wherein the TA value obtained in the random access procedure or another uplink signal transmission procedure comprises either of the following:
the first TA value received in the random access procedure or another uplink signal transmission procedure; and
any one of a plurality of TA values received when the random access procedure or another uplink signal transmission procedure succeeds.

11. The method according to claim 10, wherein a cell corresponding to a random access request in the random access procedure comprises any one of the following:
a cell transmitting the reference time;
any cell in a timing advance group to which the cell transmitting the reference time belongs;
a primary cell in the timing advance group to which the cell transmitting the reference time belongs; and
any secondary cell in the timing advance group to which the cell transmitting the reference time belongs.

12. The method according to claim 10, wherein a condition for success of the random access procedure comprises either of the following:
a second message Msg2 received by the terminal comprises identification information of a first message Msg1 received by the terminal; and
a fourth message Msg4 received by the terminal comprises identification information of a third message Msg3 received by the terminal.

13. The method according to claim 12, wherein content of the Msg1 or Msg3 comprises either or a combination of the following:
an identity of the terminal; and
request information for requesting a TA value.

14. The method according to claim 2, wherein the trigger event is configured by the network side or prescribed by a protocol.

15. The method according to claim 2, wherein the trigger event comprises any one or a combination of the following:
the terminal detects that the reference time is inaccurate;
the terminal receives information from the network side indicating that the reference time is inaccurate; and
the terminal determines that a transmitted or received service is a specific service.

16. The method according to claim 15, wherein a criterion for determining that the terminal detects that the reference time is inaccurate comprises any one of the following:
a path loss measured by the terminal is greater than or equal to a first threshold;
a variation of the path loss measured by the terminal is greater than or equal to a second threshold;
an uplink timing advance measured by the terminal is greater than or equal to a third threshold;
a variation of the uplink timing advance measured by the terminal is greater than or equal to a fourth threshold; and
the terminal detects expiry of a timer started after reference time calibration is performed.

17. The method according to claim 16, wherein any one or a combination of the first threshold, the second threshold, the third threshold, and the fourth threshold is configured by the network side or prescribed by a protocol.

18. The method according to claim 15, wherein the information from the network side indicating that the reference time is inaccurate comprises any one or a combination of the following:
frequency information for receiving the reference time, indicated by the network side;
geographical location information for receiving the reference time, indicated by the network side; and
beam information for receiving the reference time, indicated by the network side.

19. The method according to claim 18, wherein the frequency information comprises any one or a combination of the following:
a frequency identifier;
a frequency band identifier;
a bandwidth identifier; and
a bandwidth part identifier.

20. The method according to claim 18, wherein the geographical location information comprises any one or a combination of the following:
a cell identity;
a cell group identity;
an area location identity; and
an operator identity.

21. The method according to claim 18, wherein the beam information comprises either or a combination of the following:
a reference signal identifier; and
a synchronization signal block identifier.

22. The method according to claim 1, wherein the determining the time amount information for calibrating reference time comprises:
transmitting request information to the network side;
receiving, from the network side, a time amount for calibration; and
determining the time amount for calibration as the time amount information for calibrating the reference time.

23. The method according to claim 1, wherein a time position corresponding to the reference time transmitted by the network side is configured by the network side or prescribed by a protocol.

24. The method according to claim 23, wherein the time position corresponding to the reference time transmitted by the network side is a position of a signal for time synchronization of the reference time.

25. The method according to claim 24, wherein a transmission mode of the signal for time synchronization of the reference time is a periodic transmission mode or an event-triggered transmission mode.

26. The method according to claim 24, wherein a resource configuration of the signal for time synchronization of the reference time is configured by the network side or prescribed by a protocol.

27. The method according to claim 26, wherein the resource configuration of the signal for time synchronization of the reference time comprises any one or a combination of the following:
a transmission time interval;
a transmission time start position;
an offset relative to the transmission time start position;
transmission frequency information;
a width of a transmission frequency band; and
a transmission frequency domain pattern.

28. A terminal, comprising:
a determining module, configured to determine time amount information for calibrating reference time; and
a calibration module, configured to calibrate, based on the time amount information, the reference time transmitted by a network side.

29. A terminal, comprising a processor, a memory, and a program stored in the memory and capable of running on the processor, wherein when the program is executed by the processor, the steps of the time calibration method according to any one of claims 1 to 27 are implemented.

30. A computer-readable storage medium, wherein the computer-readable storage medium stores a computer program, and when the computer program is executed by a processor, the steps of the time calibration method according to any one of claims 1 to 27 are implemented.
